# EUROPÄISCHE PATENTANMELDUNG

(11) **EP 3 517 884 A1**
(43) Veröffentlichungstag der Anmeldung: **31.07.2019**
(21) Anmeldenummer: 18202453.9
(22) Anmeldetag: 25.10.2018
(51) Int. Cl.: G01B 5/00, B23Q 1/03, B23Q 5/40

(54) **VORRICHTUNG UND VERFAHREN ZUM ABSTÜTZEN VON FREIFORMWERKSTÜCKEN**

(30) Priorität: 30.10.2017 DE 102017219454
(71) Anmelder: Promess Gesellschaft für Montage- und Prüfsysteme mbH, 12277 Berlin (DE)
(72) Erfinder: Lechler, Gerhard, 12205 Berlin (DE)
(74) Vertreter: Grünecker Patent- und Rechtsanwälte PartG mbB

(57) **Zusammenfassung**

Die Erfindung betrifft eine Vorrichtung (1) und ein Verfahren zum Abstützen von Freiformwerkstücken (2), beispielsweise von frei geformten Blechen. Derartige Bleche können Karosserieteile in der Autoindustrie sein. Um derartige Freiformwerkstücke (2) ausmessen zu können, müssen sie an vorgegebenen Referenzstellen (6) an vorbestimmten Positionen im Raum abgestützt werden. Hierzu weist die Vorrichtung (1) Abstützstellen (8) auf, die an einer Mehrzahl von verfahrbaren Trageteilen (10) angeordnet sind. Kompliziertere Freiformwerkstücke (2) können eine Vielzahl von Referenzstellen (6) aufweisen, so dass eine Vielzahl von Abstützstellen (8) exakt positioniert werden muss. Um die Vorrichtung (1) so einfach wie möglich auszugestalten, sind die Trageteile (10) erfindungsgemäß von einem gemeinsamen Antrieb (16) entlang einer Bewegungsrichtung (12) antreibbar angeordnet und über eine ferngesteuerte Kupplung (26) mit dem gemeinsamen Antrieb (16) verbunden. Zum Verfahren werden die Trageteile (10) an den gemeinsamen Antrieb (16) angekuppelt. Ist die vorgegebene Position erreicht oder muss ein anderes Trageteil (10) bewegt werden, wird das Trageteil (10) vom Antrieb (16) abgekuppelt.

## Beschreibung

Die Erfindung betrifft eine Vorrichtung zum Abstützen von Freiformwerkstücken auf vorgegebenen Abstützstellen, mit einer Mehrzahl von verfahrbaren Trageteilen, an denen die Abstützstellen angeordnet sind. Die Erfindung betrifft ferner ein Verfahren zum Abstützen von Freiformwerkstücken an Abstützstellen, bei dem die Abstützstellen durch bewegliche Trageteile an vorgegebene Referenzstellen des Freiformwerkstückes gefahren werden.

Freiformwerkstücke, also dreidimensional geformte Bleche, wie beispielsweise Karosseriebleche, weisen eine komplizierte Raumform auf, die nur unter hohem Aufwand exakt zu vermessen ist. Um die Freiformwerkstücke beispielsweise während des Fertigungsprozesses immer wieder bezüglich ihrer Maßhaltigkeit zu überprüfen, müssen sie im Raum reproduzierbar positioniert werden. Hierzu werden am Blech Referenzpunkte definiert, an denen das Freiformwerkstück auf die Abstützstellen aufgelegt wird. Die Abstützstellen müssen im Raum jeweils eine vorbestimmte Position einnehmen.

Liegt das Freiformwerkstück mit den Referenzpunkten an den Abstützstellen auf, kann es, beispielsweise mit einer 3D-Laserkamera, vermessen werden, um einen Vergleich der Sollmit der Ist-Kontur herzustellen.

Um eine Vielzahl unterschiedlich geformter Freiformwerkstücke mit geringen Umrüstzeiten vermessen zu können, gibt es Vorrichtungen, die sich NC-gesteuert auf die Abmessungen der zu prüfenden Werkstücke automatisch einstellen lassen.

Da für ein Freiformwerkstück bis zu 30 Referenzpunkte vorhanden sind, sind derartige Vorrichtungen sowohl von der Steuerungs- als auch von der Antriebstechnik sehr aufwendig und teuer.

Der vorliegenden Erfindung liegt folglich die Aufgabe zu Grunde, derartige Vorrichtungen zu vereinfachen und damit weniger fehleranfällig und kostengünstiger zu machen.

Erreicht wird dies erfindungsgemäß für die eingangs genannte Vorrichtung dadurch, dass die Trageteile von einem gemeinsamen Antrieb entlang einer Bewegungsrichtung antreibbar angeordnet und über eine ferngesteuerte Kupplung mit dem gemeinsamen Antrieb verbunden sind. Für das eingangs genannte Verfahren wird diese Aufgabe erfindungsgemäß dadurch gelöst, dass die Trageteile unabhängig voneinander zum Verfahren an die Referenzstelle an einem gemeinsamen Antrieb angekuppelt und nach Erreichen der Referenzstelle von diesem abgekuppelt werden.

Diese Lösung hat den Vorteil, dass anstelle der im Stand der Technik üblichen Einzelantriebe ein gemeinsamer Antrieb verwendet wird. Je nach Bedarf werden die einzelnen Trageteile ein- oder ausgekuppelt und können so trotz nur eines einzigen gemeinsamen Antriebs unabhängig voneinander an jede beliebige Position gefahren werden. Die erfindungsgemäße Vorrichtung ist damit deutlich weniger aufwendig als die herkömmlichen Lösungen. Durch die verringerte Anzahl der Antriebe erhöht sich außerdem die Betriebssicherheit, da weniger fehleranfällige Bauteile vorhanden sind.

Durch die folgenden unabhängigen, beliebig miteinander kombinierbaren und jeweils für sich vorteilhaften Merkmale kann die Erfindung weiter verbessert werden.

So können gemäß einer ersten Ausgestaltung die Trageteile entlang der Bewegungsrichtung hintereinander angeordnet sein, was eine einfachere Ausgestaltung des Antriebs und der Kupplungen ermöglicht. Beispielsweise kann bei hintereinander angeordneten Trageteilen der Antrieb eine Antriebswelle aufweisen, die entlang der Bewegungsrichtung die Kupplungen der Tragteile durchsetzt. Bei einer solchen Ausgestaltung kann die Bewegung der Tragteile durch eine Rotation der Antriebswelle angetrieben werden, wenn gemäß einer weiteren Ausgestaltung die Antriebswelle ein insbesondere spielfreies und/oder selbsthemmendes Triebgewinde, beispielsweise ein Trapezgewinde, umfasst. Um die Drehbewegung der Antriebswelle in eine translatorische Bewegung entlang der Bewegungsrichtung der Trageteile umzusetzen, kann die Kupplung eine mit dem Triebgewinde zusammenwirkende Antriebsmutter aufweisen, die in formschlüssigem Eingriff mit dem Triebgewinde steht.

Gemäß einer weiteren Ausgestaltung kann die Kupplung ein von einer aus- in eine eingekuppelte Stellung bewegliches Sperrelement aufweisen, das in der eingekuppelten Stellung den Antrieb mit dem Trageteil koppelt.

Das Sperrelement kann ein beweglicher Bolzen sein, der in der eingekuppelten Stellung in eine komplementär ausgestaltete Aufnahme einrastet.

Die Kupplung kann in einer weiteren vorteilhaften Ausgestaltung eine mit dem jeweiligen Trageteil zumindest in der Bewegungsrichtung fest verbundene Verbindungshülse aufweisen, in der die Antriebsmutter drehbar gelagert ist, In der ausgekuppelten Stellung kann die Antriebsmutter insbesondere mit der Antriebswelle frei in der Verbindungshülse drehbar und in Bewegungsrichtung der Trageteile, also in axialer Richtung der Antriebsmutter fixiert gehalten sein. Um die Mutter herum kann ein Gehäuse gebaut sein, wobei das Gehäuse von der Mutter durch ein Wälzlager getrennt ist, beide Teile, also Mutter und Gehäuse, können durch eine Kupplung oder etwas ähnliches verbunden werden.

Gemäß einer weiteren vorteilhaften Ausgestaltung kann ein Lineartrieb als Antrieb für die Trageteile verwendet werden. Die Kupplung ist in diesem Fall zwischen Lineartrieb und Trageteil angeordnet.

Gemäß einer weiteren vorteilhaften Ausgestaltung kann der Lineartrieb wenigstens einen Schlitten aufweisen. In einer solchen Ausgestaltung können die Trageteile mit einer Kupplung versehen sein, die in Eingriff mit dem Schlitten oder einem am Schlitten angebrachten Verbindungselement gebracht werden kann. Diese Kupplung kann auch hier ein bewegliches Sperrelement aufweisen, der beispielsweise ausgefahren werden kann, um den Eingriff zwischen Trageteil und Schlitten des Lineartriebs bzw. Verbindungselement herzustellen. Ein solches Sperrelement kann beispielsweise Teil eines Hubzylinders sein, der elektromagnetisch, pneumatisch und/oder hydraulisch angetrieben wird und das Sperrelement ein- und ausfährt.

Der Lineartrieb kann gemäß einer weiteren vorteilhaften Ausgestaltung unterhalb einer ein Maschinenbett bildenden und/oder Linearführungen für die Trageteile tragenden Plattform angeordnet sein. Auf den Linearführungen ist das wenigstens eine Trageteil in Bewegungsrichtung hin und her beweglich abgestützt. Die Plattform schützt den Lineartrieb vor Beschädigung und bildet gleichzeitig eine zentrale Referenz zur Ausrichtung der einzelnen an der Bewegung der Trageteile beteiligten Komponenten entlang der Bewegungsrichtung. Die Plattform kann mit einem Schlitz versehen sein, durch den beispielsweise das Verbindungselement ragt. An dem Verbindungselement kann eine Wirkfläche zum Eingreifen der trageteilseitigen Kupplung vorhanden sein. Umgekehrt kann selbstverständlich der betätigbare Teil der Kupplung, beispielsweise das angetriebene Sperrelement, an der Seite des Lineartriebs angeordnet sein.

Eine weitere Vereinfachung der erfindungsgemäßen Vorrichtung ergibt sich, wenn für die Tragteile eine gemeinsame, insbesondere eine einzige, Positionsmesseinrichtung vorgesehen ist. Die gemeinsame und/oder einzige Positionsmesseinrichtung kann insbesondere ein an dem gemeinsamen Antrieb angebrachter Multiturn-Absolutdrehgeber sein. Die Positionsmesseinrichtung erfasst dann die absolute Position eines einzelnen mit der Antriebswelle über das Sperrelement verbundenen Tragteils.

Gemäß einer weiteren vorteilhaften Ausgestaltung kann vorgesehen sein, dass jedes der Trageteile mit einer vorzugsweise fernsteuerbaren Bremse versehen ist, durch die das jeweilige Trageteil entlang der Bewegungsrichtung an einer Halteposition fixierbar ist. Durch die Bremse ist das Trageteil gegen ein Verschieben gesichert.

Von Vorteil ist es, wenn die Bremse bei ausgekuppelter Kupplung automatisch betätigt ist bzw. wird. Ebenso kann es von Vorteil sein, wenn die Bremse bei eingekuppelter Kupplung automatisch gelöst ist bzw. wird. Durch die Kopplung der Bremsbetätigung mit der Kupplungsbetätigung wird erreicht, dass ein Trageteil automatisch sofort dann fixiert ist, wenn es vom Antrieb entkoppelt ist. Gleichzeitig ist bei einer Bewegung des Trageteils entlang der Bewegungsrichtung die Bremse automatisch gelöst.

Die Kupplung kann mit einem Kupplungssensor versehen sein, durch den ein für einen ein- und/oder ausgekuppelten Zustand der Kupplung repräsentatives Kupplungssignal erzeugbar ist.

Die Bremse kann mit einem Bremssensor versehen sein, durch den ein für einen gelösten und/oder eingerückten Zustand der Bremse repräsentatives Bremssignal erzeugbar ist.

Mit Hilfe eines Brems- und/oder Kupplungssignals lässt sich der Betriebszustand der Vorrichtung erfassen und sicherstellen, dass Kupplung und Bremse nicht gegeneinander arbeiten.

Zur Fernsteuerung der Bremsen und/oder Kupplungen kann eine Steuereinheit vorhanden sein, die ausgestaltet ist, die Bremse in Abhängigkeit vom Kupplungsignal und/oder die Kupplung in Abhängigkeit vom Bremssignal zu betätigen.

Jedes Trageteil kann eine Mehrzahl an Abstützstellen tragen. Bevorzugt sind die Abstützstellen auf dem Trageteil in einer Verfahrrichtung, insbesondere quer zur Bewegungsrichtung, verfahrbar angeordnet. Ähnlich den Trageteilen können mehrere Verfahreinheiten eines Trageteils einen gemeinsamen Antrieb aufweisen. Jede Verfahreinheit auf einem Trageteil kann eine Kupplung aufweisen, um unabhängig voneinander in den gemeinsamen Antrieb der Verfahreinheiten einzukuppeln oder sich von diesem Antrieb zu lösen.

Die Abstützstellen können gemäß einer weiteren vorteilhaften Ausgestaltung sowohl quer zur Bewegungsrichtung der Trageteile als auch quer zur Verfahrrichtung der Verfahreinheiten verfahrbar, insbesondere teleskopierbar, sein. Beispielsweise kann die Bewegungsrichtung der Trageteile einer x-, die Verfahrrichtung der Verfahreinheiten einer y- und die Richtung, in der die Abstützstellen auf den Verfahreinheiten bewegt oder teleskopiert werden, einer z-Achse entsprechen.

Im Betrieb können die Trageteile abwechselnd durch alternierendes Ein- und Auskuppeln der Kupplungen verfahren werden. Mehrere Trageteile können aber auch eingekuppelt gemeinsam verfahren werden, bis eines der Trageteile seine vorgegebene Position erreicht hat, in der es ausgekuppelt wird, während ein anderes Trageteil oder die anderen Trageteile noch weiter verfahren wird oder werden.

Sobald die Trageteile vom Antrieb abgekuppelt werden, werden sie durch die Bremse in ihrer Lage fixiert.

Die Vorrichtung kann eine Steuereinheit mit einem Speicher aufweisen, in dem die jeweilige Position eines Trageteils, wie sie mit Hilfe der Positionsmesseinrichtung ausschließlich im eingekuppelten Zustand der Kupplung erfasst wird, bevorzugt nicht-flüchtig abgelegt ist.

Wird ein Trageteil nach Erreichen seiner in Bewegungsrichtung vorgegebenen Position abgekoppelt und soll anschließend an eine andere Position entlang der Bewegungsrichtung angefahren werden, so kann gemäß einer weiteren Ausgestaltung der Antrieb zunächst auf die gespeicherte bereits erreichte vorgegebene Position des Trageteils zurückfahren, an der dann die Kupplung dieses Trageteils eingekuppelt wird. Diese Vorgehensweise stellt sicher, dass das Einkuppeln und die weitere Bewegung des Trageteils nach einem Auskuppeln jeweils an einer exakt definierten Position erfolgen.

Im Folgenden ist die Erfindung anhand eines Ausführungsbeispiels exemplarisch näher erläutert. Die bei dem Ausführungsbeispiel dargestellte und beschriebene Merkmalskombination kann dabei nach Maßgabe der obigen Ausführungen abgeändert werden. So kann beispielsweise auf ein Merkmal des Ausführungsbeispiels verzichtet werden, wenn es auf den mit diesem Merkmal verknüpften technischen Effekt bei einer bestimmten Anwendung nicht ankommen sollte. Umgekehrt kann dem Ausführungsbeispiel ein Merkmal hinzugefügt werden, wenn dessen technischer Effekt für eine bestimmte Anwendung vorteilhaft ist.

In den Figuren werden für Elemente, die einander hinsichtlich Funktion und/oder Aufbau entsprechen, dieselben Bezugszeichen verwendet.

Es zeigen:
- Fig. 1: eine schematische Perspektivdarstellung einer erfindungsgemäßen Vorrichtung;
- Fig. 2: eine schematische Perspektivdarstellung einer Antriebsmutter der Vorrichtung von Fig. 1;
- Fig. 3: eine schematische Perspektivdarstellung der Antriebsmutter der Fig. 2 mit Lagern;
- Fig. 4: eine schematische Perspektivdarstellung einer Kupplung der Vorrichtung der Fig. 1;
- Fig. 5: eine schematische Schnittdarstellung der erfindungsgemäßen Vorrichtung mit einem Lineartrieb.

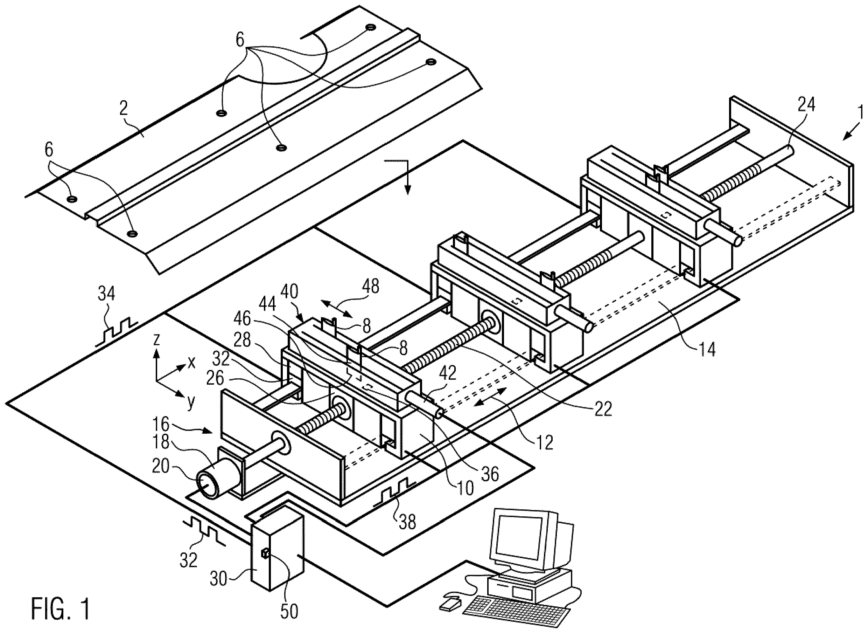

Zunächst werden Aufbau und Funktion einer erfindungsgemäßen Vorrichtung 1 anhand der Fig. 1 beschrieben. Auf die Vorrichtung 1 können auf der Freiformwerkstücke 2, beispielsweise Karosseriebleche oder andere dreidimensional geformte Werkstücke, insbesondere zum Vermessen abgestützt werden. Zur Vermessung dient eine Kamera 4, beispielsweise eine 3D-Laserkamera oder eine andere Messvorrichtung, wie beispielsweise ein beweglicher Abtastkopf.

Das Freiformwerkstück 2 weist vorgegebene Referenzstellen 6 auf, die beispielsweise während des Konstruktionsprozesses festgelegt worden sind. Um die Ist-Kontur des Freiformwerkstückes 2 mit der Soll-Kontur vergleichen zu können, muss das Freiformwerkstück 2 auf der Vorrichtung 1 an den Referenzstellen 6 abgestützt werden. Hierzu dienen Abstützstellen 8 der Vorrichtung 1, die fingerförmig ausgestaltet sein können. Die Abstützstellen 8 sind bevorzugt in den drei orthogonalen Raumrichtungen x, y und z beweglich in der Vorrichtung 1 angeordnet, um sie mit den Referenzstellen 6 und deren Lage im Raum exakt in Deckung zu bringen.

Die Abstützstellen 8 befinden sich an einer Mehrzahl von Trageteilen 10. Jedes Trageteil weist bevorzugt wenigstens zwei oder mehr Abstützstellen 8 auf. In Fig. 1 weist die Vorrichtung 1 lediglich zu Beispielzwecken drei Trageteile 10 auf. Es können pro Vorrichtung zwei und mehr Trageteile vorhanden sein.

Die Trageteile 10 sind entlang einer Bewegungsrichtung 12 verfahrbar. Die Bewegungsrichtung 12 verläuft beispielsweise parallel zur Raumrichtung x.

Die Trageteile 10 können in Bewegungsrichtung durch eine oder mehrere Linearführungen 14, beispielsweise Schienen, geführt und getragen sein. Ein gemeinsamer Antrieb 16 verfährt die Trageteile 10 in Bewegungsrichtung 12. Der Antrieb 16 umfasst einen Motor 18, beispielsweise einen Servomotor. Ferner kann der Antrieb 16 eine Positionsmesseinrichtung 20 zur Erfassung der absoluten Winkelposition über mehrere Umdrehungen, beispielsweise einen Multiturn-Absolutdrehgeber, aufweisen. Dies ermöglicht den Betrieb ohne Kenntnis einer Ausgangsposition der Drehbewegung. Es muss bei Inbetriebnahme lediglich einmal eine Nullposition definiert werden, die dann stets in Bezug zur gemessenen Absolutposition gesetzt wird. Der Antrieb 16 kann ferner eine sich in Bewegungsrichtung 12 erstreckende Antriebswelle 22 aufweisen, die vom Motor 18 rotatorisch angetrieben wird. Über die Positionsmesseinrichtung 20 kann die Absolutposition eines mit der Antriebswelle 22 verbundenen Tragteils bevorzugt über mehrere vollständige Drehungen eindeutig erfasst werden. Die Antriebswelle 22 kann mit einem Triebgewinde 24, beispielsweise einem selbsthemmenden Gewinde, insbesondere einem Trapezgewinde, versehen sein.

Die Trageteile 10 sind in Bewegungsrichtung 12 hintereinander angeordnet und jeweils über eine Kupplung 26 mit dem Antrieb 16 verbunden. Bei der dargestellten Ausführungsform durchsetzt die Antriebswelle 22 die Kupplungen 26 der hintereinander liegenden Trageteile 10. Bei eingekuppelter Kupplung 26 ist das Trageteil 10 mit dem Antrieb 16, insbesondere der Antriebswelle 22 gekoppelt, so dass es sich in Bewegungsrichtung 12 durch den Antrieb 16 verfahren lässt. Bei ausgekuppelter Kupplung 26 ist das Trageteil 10 vom Antrieb 16 entkoppelt, so dass es stehenbleibt.

Um das Trageteil 10 im ausgekuppelten Zustand an der jeweiligen Position zu fixieren, kann eine mit beispielsweise einer Linearführung 14 zusammenwirkende Bremse 28 vorgesehen sein. Die Kupplung 26 und die Bremse 28 können bezüglich ihrer Betriebszustände miteinander gekoppelt sein, so dass im ausgekuppelten Zustand der Kupplung 26 die Bremse 28 automatisch betätigt und das Trageteil 10 in Bewegungsrichtung 12 fixiert ist. Bei eingekuppelter Kupplung 26 kann die Bremse 28 automatisch gelöst sein, so dass das Trageteil 10 entlang der Bewegungsrichtung 12 verfahrbar ist. Die Kupplung 26 und/oder die Bremse 28 sind bevorzugt ferngesteuert, beispielsweise durch eine Steuereinheit 30.

Der Steuereinheit 30 können Positionssignale 32 der Positionsmesseinrichtung 20 zugeführt sein. Die Bremse 28 kann mit einem Bremsensensor 32 versehen sein, der ein für den Zustand der Bremse 28 repräsentatives Bremsensignal 34 der Steuereinheit 30 zur Verfügung stellt. Das Bremsensignal 34 ist repräsentativ für den gelösten und/oder betätigten Zustand der Bremse 28. Ein Kupplungssensor 36 kann ein für den ein- und/oder ausgekuppelten Zustand der Kupplung 26 repräsentatives Kupplungssignal 38 ausgeben, das ebenfalls der Steuereinheit 30 zugeführt sein kann.

Die Trageteile 10 können insbesondere auf ihrer Oberseite mit Verfahreinheiten 40 versehen sein, wobei jede Verfahreinheit 40 eine Abstützstelle 8 aufweist und diese in einer Richtung quer zur Bewegungsrichtung 12, beispielsweise in Richtung der y-Achse, verfährt. Weist die Verfahreinheit 40 eines Trageteils 10 mehr als eine Abstützstelle 8 auf, so können diese durch einen gemeinsamen Antrieb 42 unabhängig voneinander verfahrbar angetrieben sein. Zwischen den Abstützstellen 8 und dem Antrieb 42 kann, wie bei den Trageteilen 10, eine in Fig. 1 nur schematisch dargestellte Kupplung 44 angeordnet sein, um die Abstützstellen 8 wahlweise mit dem Antrieb 42 zu koppeln und zu entkoppeln. Auch hier kann eine ebenfalls nur schematisch angedeutete Bremse 46 vorgesehen sein, um die Abstützstellen 8 in der Verfahrrichtung 48 der Verfahreinheit 40 zu fixieren. Die Verfahreinheiten 40 sind, wie die Trageteile 10 auch, mit der Steuereinheit 30 verbunden und werden von der Steuereinheit 30 gesteuert.

Die Abstützstellen 8 schließlich können teleskopierbar ausgestaltet sein, so dass sie entlang der z-Achse beweglich sind. Auch diese Bewegung wird bevorzugt von der Steuereinrichtung 30 gesteuert.

Sämtliche Trageteile 10 der Vorrichtung 1 können identisch aufgebaut sein. Alternativ kann auch nur eine Teilmenge aus wenigstens zwei Trageteilen 10 einen identischen Aufbau aufweisen.

Im Folgenden wird die Funktion der Vorrichtung 1 erläutert.

Um die Referenzstellen 6 mit den Abstützstellen 8, oder genauer, deren oberen Enden, eines Trageteils 10 anzufahren, wird zunächst die Kupplung 26 ferngesteuert durch die Steuereinheit 30 eingekuppelt und die Bremse 28 ebenfalls ferngesteuert durch die Steuereinrichtung 30 gelöst. Alternativ können die Bremse 28 und die Kupplung 26 auch auf dem Trageteil elektrisch, magnetisch und/oder mechanisch miteinander so gekoppelt sein, dass das ferngesteuerte Einkuppeln automatisch zu einem Lösen der Bremse und das ferngesteuerte Auskuppeln automatisch zu einem Betätigen der Bremse führt. Das Trageteil 10 wird darum in Bewegungsrichtung 12 verfahren, bis die ihm vorgegebene Position in Bewegungsrichtung 12 erreicht ist. An der vorgegebenen Position wird die Kupplung 26 ausgekuppelt und die Bremse 28 betätigt, so dass das Trageteil 10 an dieser Stelle fixiert ist. Zusammen mit dem Trageteil 10 können prinzipiell auch weitere Trageteile 10 gleichzeitig verfahren werden. Bevorzugt werden jedoch die Trageteile nacheinander an die jeweilige Position in Bewegungsrichtung 12 verfahren werden. Gleichzeitig mit dem Verfahren der Trageteile 10 oder danach können die Verfahreinrichtungen 40 in Verfahrrichtung 48 verfahren und/oder die Abstützstellen 8 teleskopiert werden.

Sind alle Abstützstellen 8 für das jeweils zu vermessende Freiformwerkstück 2 positioniert, wird das Freiformwerkstück 2 mit den Referenzstellen 6 auf den Abstützstellen 8 abgelegt und die Vermessung beginnt.

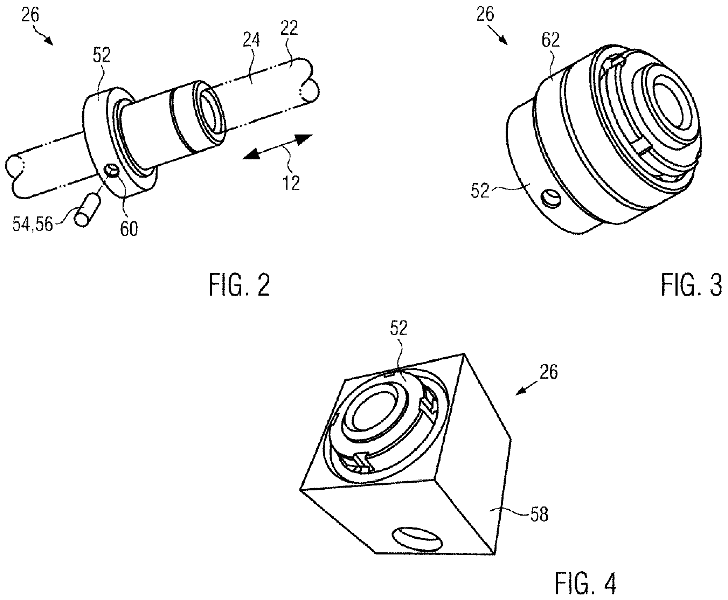

Müssen die Abstützstellen 8 an neue Positionen im Raum verfahren werden, weil ein anders geformtes Freiformwerkstück 2 zu vermessen ist, so bewegt sich der Antrieb 16 bei ausgekuppelter Kupplung 26 zunächst an die Position, an der die Kupplung 26 dieses Trageteils 10 gelöst wurde bzw. an der sich das Trageteil 10 befindet. Exakt an dieser Stelle wird dann das Trageteil 10 wieder eingekuppelt und anschließend verfahren. Die Positionen, an denen die Trageteile 10 ausgekuppelt werden, sind hierzu in einem Speicher 50 der Steuereinheit 30 abgelegt. Sobald die Kupplung 36 an dieser Position wieder eingekuppelt ist, kann das Trageteil 10 an die neue vorgegebene Position in Bewegungsrichtung verfahren werden. Dieses Vorgehen eignet sich insbesondere bei einer Kupplung, die nur an diskreten Drehpositionen gekuppelt werden kann. Eine solche Kupplung ist mit Bezug auf die Fig. 2 bis 4 näher erläutert.

Bei einer in jeder Drehstellung betätigbaren Kupplung kann natürlich die Kupplung 26 sofort betätigt werden, wenn das Trageteil 10 eine neue Position anfahren muss. Ein Zurückfahren des Antriebs 18 bzw. der Antriebswelle 22 an die ursprüngliche Position des Tragteils 10 ist dann nicht mehr nötig. Hierzu muss allerdings in der Steuereinheit 30 die neue Position des Trageteils 10 stets inkremental aus der vorherigen Position bestimmt werden. Außerdem müssen in der Steuereinheit 30 die Positionen sämtlicher Trageteile 10 verwaltet werden, um eine Kollision zwischen beispielsweise einem stillstehenden und einem bewegten Trageteil zu verhindern.

Die Vorrichtung 1 kann in Fig. 1 nicht dargestellte Referenzmarken aufweisen, um die Positionen der Trageteile 10 zu nullen bzw. dem Multiturngeber einen absoluten Nullpunkt zu verschaffen. Insbesondere kann die Kamera 4 oder eine entsprechend andere Kamera zur Vermessung der Freiformwerkstücke 2 zur ergänzenden Lagebestimmung der Trageteile 10 verwendet werden.

Die Fig. 2 bis 4 zeigen ein Ausführungsbeispiel einer Kupplung 26.

Die Kupplung 26 weist eine Antriebsmutter 52 auf, die sich mit dem Triebgewinde 24 der Antriebswelle 22 im Eingriff befindet. Die Antriebsmutter 52 kann über ein Sperrelement 54, beispielsweise einen Sperrbolzen 56, mit einer Verbindungshülse 58, in der die Antriebsmutter 52 drehbar aufgenommen ist, drehfest verbunden werden. Hierzu weist die Antriebsmutter 52 eine Aufnahme 60 für das Sperrelement 54 auf. Die Aufnahme 60 stellt einen in Drehrichtung der Antriebswelle 22 wirksamen Form- und/oder Reibschluss zwischen der Antriebsmutter 52 und der Verbindungshülse 58 her. Das Sperrelement 54 ist radial, beispielsweise elektromagnetisch, beweglich in der Verbindungshülse 58 gehalten und kann in die Aufnahme 60 femgesteuert ein- und ausfahren. Alternativ kann der Sperrbolzen auch in der Antriebsmutter verschieblich angetrieben gehalten sein und zum Einkuppeln in die Verbindungshülse 58 einfahren.

Auf der Gewindemutter 52 sitzt wenigstens ein Drehlager 62, beispielsweise ein Wälzlager.

Das Sperrelement 54 sowie der Antrieb zu seiner Betätigung befinden sich in der Verbindungshülse 58. Ist das Sperrelement 54 aus der Aufnahme 60 bewegt, so kann sich die Antriebsmutter 52 über die zwischen der Antriebsmutter 52 und der Verbindungshülse 58 angeordnete Drehlager in der Verbindungshülse 58 drehen. Wird die Antriebswelle 22 mit dem Triebgewinde 24 bewegt, so dreht sich in diesem, ausgekuppelten, Zustand die Antriebsmutter 52 in der Verbindungshülse 58 mit der Antriebswelle 22 mit. Ist das Sperrelement 54 in die Aufnahme 60 bewegt, so sind Verbindungshülse 58 und über die Verbindungshülse 58 das Trageteil 10, in dem die Verbindungshülse 58 befestigt ist, drehstarr mit der Antriebsmutter 52 verbunden. Die Antriebsmutter 52 kann sich nun nicht mehr mit der Antriebswelle 22 mitdrehen, so dass sie zusammen mit der Verbindungshülse 58 und dem Trageteil 10 in Bewegungsrichtung 12 verschoben wird.

Die dargestellte Ausgestaltung der Kupplung 26 erlaubt das Einkuppeln nur an bestimmten, diskreten Drehpositionen der Antriebswelle 22, nämlich wenn die Aufnahme 60 und das Sperrelement 54 miteinander fluchten. Um das Einkuppeln an einer exakt definierten Position sicherzustellen, wird daher, wie oben beschrieben, der Antrieb 16 an die Position zurückgefahren, an der die Kupplung 26 gelöst wurde, bevor die Kupplung 26 eingekuppelt wird.

Selbstverständlich können auch andere Kupplungsformen vorgesehen sein. Beispielsweise kann eine Reibkupplung oder eine Zahnkupplung mit in Bewegungsrichtung weisenden Kupplungsflächen vorgesehen sein.

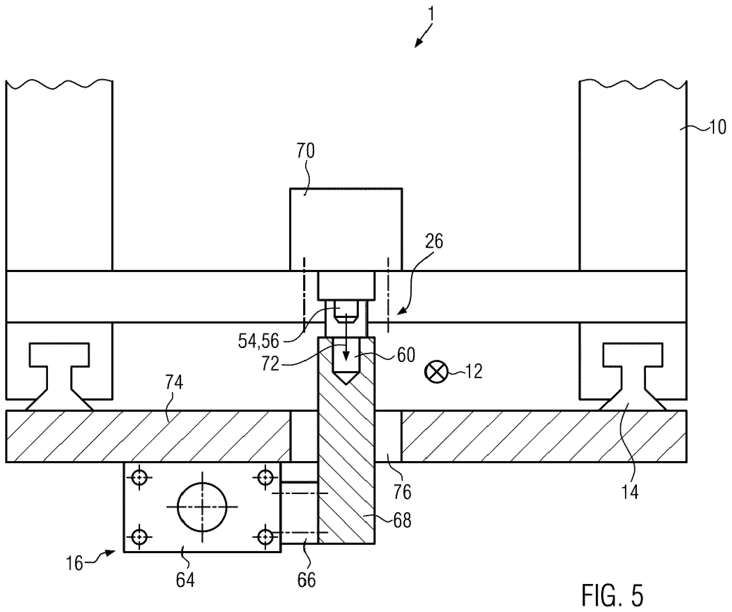

In Fig. 5 ist ein schematischer Schnitt durch eine Vorrichtung 1 mit Sicht entlang der Bewegungsrichtung 12 auf ein Trageteil 10 dargestellt. Anstelle einer Antriebswelle 22 und einer Antriebsmutter 52 kommt bei dem Ausführungsbeispiel der Fig. 5 als Antrieb 16 ein Lineartrieb 64 zum Einsatz. Der Lineartrieb 16 erstreckt sich entlang der Bewegungsrichtung 12. Ein Schlitten 66 des Lineartriebs kann über ein Verbindungselement 68 mit dem Trageteil 10 gekoppelt oder vom Trageteil 10 losgekoppelt werden. Hierzu ist wieder eine Kupplung 26 vorgesehen, deren einer Teil sich am Verbindungselement 68 befindet. Das Verbindungselement 68 kann einfach, beispielsweise in Form einer Platte, ausgestaltet sein.

Die Kupplung 26 kann wieder ein Sperrelement 54, z.B. in Form eines Sperrbolzens 56, aufweisen. Bei der in Fig. 5 dargestellten Ausgestaltung ist das Sperrelement 54 Teil eines Hubzylinders 70, der von der Steuereinheit 30 bedient werden kann. Der Hubzylinder 70 kann lineartriebseitig oder trageteilseitig angeordnet sein. Bei der dargestellten Ausführung ist der Hubzylinder 70 am Trageteil 10 angebracht. Das Verbindungselement 68 weist eine Aufnahme 60 für das Sperrelement 54 auf, in die das Sperrelement entlang der Richtung des Pfeils 72 einfährt, wenn der Schlitten 66 bzw. das Verbindungselement 68 entlang der Bewegungsrichtung 12 an die Stelle herangefahren ist, an der sich das Trageteil 10 befindet.

Der Lineartrieb 64 kann an einer Plattform 74 angebracht sein, die auch die Linearführungen 14 trägt. Die Plattform 74 bildet bevorzugt Referenzflächen, an denen sowohl die Linearführungen 14 als auch der Lineartrieb 64 entlang der Bewegungsrichtung 12 ausgerichtet werden können.

Bevorzugt ist der Lineartrieb 64 auf der von den Linearführungen 14 abgewandten Seite der Plattform angebracht. In einer solchen Ausgestaltung kann ein Schlitz 76 vorgesehen sein, durch den sich das Verbindungselement 68 erstreckt. Der Schlitz 76 erstreckt sich entlang der Bewegungsrichtung 12.

Die Funktionsweise der in Fig. 5 dargestellten Ausgestaltung entspricht der Funktionsweise der Ausgestaltung der Fig. 1. Der einzige Unterschied besteht darin, dass das Sperrelement 54 nicht in ein sich drehendes Gegenstück einfährt, sondern in ein sich translatorisch bewegendes Gegenstück, hier das Verbindungselement 68.

### Bezugszeichen

- 1: Vorrichtung
- 2: Freiformwerkstück
- 4: Kamera
- 6: Referenzstelle des Freiformwerkstücks
- 8: Abstützstelle der Vorrichtung
- 10: Trageteil
- 12: Bewegungsrichtung
- 14: Linearführung
- 16: Antrieb
- 18: Motor
- 20: Positionsmesseinrichtung
- 22: Antriebswelle
- 24: Triebgewinde
- 26: Kupplung
- 28: Bremse
- 30: Steuereinheit
- 32: Bremsensensor
- 34: Bremsensignal
- 36: Kupplung
- 38: Kupplungssignal
- 40: Verfahreinheit
- 42: Antrieb der Verfahreinheit
- 44: Kupplung der Verfahreinheit
- 46: Bremse der Verfahreinheit
- 48: Verfahrrichtung
- 50: Speicher der Steuereinheit
- 52: Antriebsmutter
- 54: Sperrelement
- 56: Sperrbolzen
- 58: Verbindungshülse
- 60: Aufnahme
- 62: Drehlager
- 64: Lineartrieb
- 66: Schlitten
- 68: Verbindungselement
- 70: Hubzylinder
- 72: Pfeil
- 74: Plattform
- 76: Schlitz

## Patentansprüche

1. Vorrichtung (1) zum Abstützen von Freiformwerkstücken (2) auf vorgegebenen Abstützstellen (8), mit einer Mehrzahl von verfahrbaren Trageteilen (10), an denen die Abstützstellen (8) angeordnet sind, **dadurch gekennzeichnet, dass** die Trageteile (10) von einem gemeinsamen Antrieb (16) entlang einer Bewegungsrichtung (12) antreibbar angeordnet und über eine ferngesteuerte Kupplung (26) mit dem gemeinsamen Antrieb (16) verbunden sind.

2. Vorrichtung (1) nach Anspruch 1, **dadurch gekennzeichnet, dass** die Trageteile (10) entlang der Bewegungsrichtung (12) hintereinander angeordnet sind.

3. Vorrichtung (1) nach Anspruch 1 oder 2, **dadurch gekennzeichnet, dass** der Antrieb (16) eine Antriebswelle (22) aufweist, die entlang der Bewegungsrichtung (12) die Kupplungen (26) der Trageteile (10) durchsetzt.

4. Vorrichtung (1) nach Anspruch 3, **dadurch gekennzeichnet, dass** die Antriebswelle ein Triebgewinde (24) umfasst.

5. Vorrichtung (1) nach Anspruch 4, **dadurch gekennzeichnet, dass** die Kupplung (26) ein zum Aus- und Einkuppeln bewegliches Sperrelement (54) aufweist.

6. Vorrichtung (1) nach Anspruch 5, **dadurch gekennzeichnet, dass** das Sperrelement (54) sich am Trageteil (10) befindet.

7. Vorrichtung (1) nach einem der Ansprüche 1 bis 6, **dadurch gekennzeichnet, dass** jedes der Trageteile (10) mit einer Bremse (28) versehen ist, durch die das jeweilige Trageteil (10) entlang der Bewegungsrichtung (26) fixierbar ist.

8. Vorrichtung (1) nach Anspruch 7, **dadurch gekennzeichnet, dass** die Bremse (28) automatisch betätigt ist, wenn die Kupplung (26) ausgekuppelt ist.

9. Vorrichtung (1) nach einem der Ansprüche 1 bis 8, **dadurch gekennzeichnet, dass** jedes Trageteil (10) eine Mehrzahl von Verfahreinheiten (40) aufweist, welche die Abstützstellen (8) querbeweglich zur Bewegungsrichtung halten und einen gemeinsamen Antrieb (42) aufweisen.

10. Vorrichtung (11) nach Anspruch 9, **dadurch gekennzeichnet, dass** jede Verfahreinheit (40) eines Trageteils (10) über eine Kupplung (44) mit dem gemeinsamen Antrieb (42) der Verfahreinheit (40) verbunden ist.

11. Verfahren zum Abstützen von Freiformwerkstücken (2) an Abstützstellen (8), bei dem die Abstützstellen (8) durch bewegliche Trageteile (10) an jeweils vorgegebene Referenzstellen (6) der Freiformwerkstücke (2) gefahren werden, **dadurch gekennzeichnet, dass** die Trageteile (10) unabhängig voneinander zum Fahren an die jeweils vorgegebenen Referenzstellen an einem gemeinsamen Antrieb angekuppelt und nach Erreichen der jeweils vorgegebenen Referenzstelle vom gemeinsamen Antrieb (16) abgekuppelt werden.

12. Verfahren nach Anspruch 11, **dadurch gekennzeichnet, dass** die Trageteile automatisch durch eine Bremse (28) fixiert werden, sobald die Trageteile (10) vom gemeinsamen Antrieb (16) abgekuppelt werden.

13. Verfahren nach Anspruch 11 oder 12, **dadurch gekennzeichnet, dass** nach dem Abkuppeln eines Trageteils (10) der gemeinsame Antrieb (16) zunächst an die Position fährt, an der das Trageteil (10) abgekuppelt wurde, bevor es wieder an den gemeinsamen Antrieb (16) angekuppelt wird.

14. Verfahren nach einem der Ansprüche 11 bis 13, **dadurch gekennzeichnet, dass** zum Anfahren der Referenzstellen (6) eine Mehrzahl von Abstützstellen (8) auf dem Trageteil (10) mittels eines gemeinsamen Antriebs (42) quer zur Bewegungsrichtung (12) verfahren wird.
